# EUROPÄISCHE PATENTSCHRIFT

(11) **EP 3 643 485 B1**
(45) Veröffentlichungstag und Bekanntmachung des Hinweises auf die Patenterteilung: **23.11.2022**
(21) Anmeldenummer: 19197647.1
(22) Anmeldetag: 17.09.2019
(51) Int. Cl.: B29D 29/08, B29D 29/06, B65G 15/34

(54) **VERFAHREN ZUR HERSTELLUNG EINES ANTRIEBSRIEMENS MIT EINER ELEKTRONISCHEN EINRICHTUNG UND DERARTIGES BAUTEIL**
METHOD FOR PRODUCING A DRIVE BELT WITH AN ELECTRONIC DEVICE AND SUCH A COMPONENT
PROCÉDÉ DE FABRICATION D'UN COURROIE D'ENTRAÎNEMENT DOTÉE D'UN DISPOSITIF ÉLECTRONIQUE ET PIECE CORRESPONDANTE

(30) Priorität: 26.10.2018 DE 102018218341
(43) Veröffentlichungstag der Anmeldung: 29.04.2020
(73) Patentinhaber: ContiTech Antriebssysteme GmbH, 30165 Hannover (DE)
(72) Erfinder: Sattler, Heiko, 30165 Hannover (DE); Rosenbohm, Svenja, 30165 Hannover (DE); Mahnken, Claus-Lüder, 30165 Hannover (DE); Reck, Siegfried, 30165 Hannover (DE); Rosen, Simon, 30165 Hannover (DE)
(74) Vertreter: Continental Corporation

(56) Entgegenhaltungen:
- WO-A1-93/18315
- WO-A1-2005/030621
- WO-A1-2010/033526
- WO-A1-2017/207123
- DE-A1-102009 003 732
- DE-A1-102010 016 359
- JP-A- 2011 073 806
- KR-A- 20080 111 799
- US-A- 4 621 727
- US-A1- 2006 055 531

## Beschreibung

Die Erfindung betrifft ein Verfahren zur Herstellung eines unter Zugspannung umlaufend angetriebenen und mit einer Antriebsseite, einer Rückenseite und mit Seitenflächen versehenen Antriebsriemens aus elastomerem Material, mit einer eingebauten elektronischen Schaltung oder elektronischen Einrichtung, wobei der Antriebsriemen in Längsrichtung angeordnete Zugträger oder Corde aufweist, wobei die Konfektion auf einer Aufbautrommel und in Form eines zylindrischen Rohlings erfolgt, dessen Länge einem Vielfachen der Antriebsriemenbreite entspricht Mithilfe solcher elektronischen Schaltungen oder elektronischen Einrichtungen in bandförmigen Bauteilen aus elastomerem Material, dann ausgebildet als Sensoren, Verarbeitungseinrichtungen sowie Sende- und Empfangseinrichtungen für Daten und Signale sind Zustandsgrößen des Bauteils messbar und können drahtlos an eine entfernt angeordnete Empfangseinheit weitergeleitet werden. Weiterhin betrifft die Erfindung einen Antriebsriemen mit einer eingebauten elektronischen Schaltung oder elektronischen Einrichtung, der nach dem Verfahren hergestellt ist.

Riemen- oder bandförmige Bauteile, etwa Antriebsriemen in kapitalintensiven Maschinen und Anlagen erfordern eine sorgfältige und Schäden vorbeugende Instandhaltung derselben. Daher werden die dort genutzten Antriebsriemen derzeit nach vergleichsweise kurzer Nutzungsdauer ausgewechselt, um die Gefahr von Schäden an den Maschinen oder Anlagen und somit kostspielige Stillstandzeiten zu verringern. Es wurde bereits mehrfach vorgeschlagen, derartige Antriebsriemen mit einer Elektronik auszustatten, welche mit einem entfernt angeordneten Überwachungssystem drahtlos in Verbindung stehen. Die von dieser Elektronik sensorisch erfassten Zustandsdaten des Antriebsriemens werden dazu genutzt, eine riemenzustandsabhängige Wartung der Maschinen oder Anlagen vorzusehen, wodurch im Ergebnis die Anzahl der Stillstandzeiten aus Wartungsgründen reduziert wird.

Werden Antriebsriemen mit solchen elektronischen Einrichtungen ausgestattet, so dass Messgrößen und/oder Identifikationsdaten erfasst und im laufenden Betrieb drahtlos übertragen werden können, so ist also ein abnutzungsgerechter und von Verwechslung sicherer Austausch möglich. Im Betrieb sind jedoch die elektronischen Komponenten im oder am Riemen den üblichen Belastungen in einem Riementrieb ausgesetzt, nämlich Staub, hohen Temperaturen und gerade bei Antriebsriemen wechselnden Dehnungen und Zugbelastungen oder Stauchungen. Mindestens den Belastungen durch Staub und von außen einwirkenden Umgebungseinflüssen wird im Stand der Technik dadurch begegnet, dass die Elektronikbauteile im Antriebsriemen gekapselt sind.

So ist aus der DE 10 2009 003 732 A1 ein flexibler Antriebsriemen bekannt, in dessen elastomeren Material eine Tasche ausgebildet ist, in der ein Sensor sowie ein damit elektrisch verbundenes flexibles Piezoelement angeordnet sind. Das flexible Piezoelement erzeugt aufgrund von Riemenbewegungen durch zeitliche Änderung seines Biegeradius elektrische Energieportionen, welche zur Energieversorgung des Sensors dienen. Gemäß einer dortigen ersten Ausführungsform ist das Piezoelement durch Einvulkanisieren fest und unlösbar mit dem Riemenmaterial verbunden. Gemäß einer zweiten Ausführungsform ist vorgesehen, dass der Antriebsriemen eine Tasche aufweist, in die das flexible Piezoelement nach der Vulkanisation des Riemens derart mit dem Sensor und elektrischen Verbindungselementen einsteckbar ist, dass das Piezoelement an die Bewegungen des Riemens im Betrieb angekoppelt ist. Durch die feste Verbindung des Piezoelements mit dem Riemenmaterial wird dieses bei einer betriebsbedingten Bewegung des Riemens zur Energieerzeugung angeregt. Die in dem Material des Riemens ausgebildete Tasche ist nach einem Einstecken des Sensors und des Piezoelements irreversibel verschließbar.

Als nachteilig wird beurteilt, dass das Einvulkanisieren der Elektronik wegen der bis zu 180°C betragenden Vulkanisationstemperatur und des Vulkanisationsdrucks von bis 1,5 MPa diese schädigen kann. Auch das Erzeugen einer Tasche im Material des Antriebsriemens kann unvorteilhaft sein, wenn dadurch die Riemenstruktur geschädigt oder zumindest inhomogen wird. Die letztgenannten Nachteile weist nach diesseitiger Beurteilung auch der aus der DE 10 2010 002 551 A1 bekannte Antriebsriemen auf, bei dem eine Elektronik mit einem RFID-Transponder in das Material des Antriebsriemens einvulkanisiert ist.

Zudem birgt die übliche Herstellung von Riemenwickeln auf einer Riemenaufbautrommel die Gefahr, dass nach dem Vulkanisieren des Wickels bei der daran anschließenden Vereinzelung desselben in separate Antriebsriemen sich die dort eingebaute Elektronik nicht exakt lokalisieren lässt, in dessen Folge die Elektronik durch die zur Vereinzelung notwendigen Schnitte zerstört wird. Dies kann insbesondere dann geschehen, wenn beispielsweise zur Ausbildung von Riemenzähnen Fließprozesse im Wickelmaterial stattgefunden haben und dadurch eine zuvor bekannte Position der Elektronik verändert ist. Zudem kann eine Schädigung der einvulkanisierten Elektronik bei einem Umkrempeln der aus dem Wickel vereinzelten Riemen erfolgen.

Außerdem sind in Antriebsriemen einvulkanisierte Elektronikschaltungen im Betrieb während des Umlaufs des Antriebsriemens an Riemenscheiben sehr häufigen Dehnungen und Stauchungen ausgesetzt. Dasselbe gilt für Elektronikteile, die etwa in Förderbändern eingebaut sind, die über Trommeln oder Rollen über viele Kilometer geführt werden und Schüttgut transportieren. Da üblicherweise die Elektronikteile selbst oder auch die Trägerfolien, auf denen solche Elektronikteile aufgebracht sind, auf Dehnungen und Stauchungen völlig anders reagieren als das umgebende elastomere Material, kann es bei einer zu innigen Verbindung zwischen den Elektronikteilen und dem umgebenden Material zu Abrissen oder zu Brüchen in den Schaltungen kommen.

Die Patentanmeldeschrift JP 2011073806 A offenbart ein Verfahren zum Einbringen eines Elektronikbauteils in ein Förderband, bei dem ein Platzhalter zum Formung einer Tasche während der Vulkanisation des Bandes verwendet und anschließend das Elektronikbauteil in die Tasche des Bandes eingeführt wird. Ein Beispiel für die Herstellung eines Riemens ohne elektronische Bauteile mittels Aufbautrommel ist in der Anmeldeschrift WO 93/18315 A beschrieben.

Vor diesem Hintergrund lag der Erfindung die Aufgabe zugrunde, ein unter Zugspannung umlaufend angetriebenes riemen- oder bandförmiges Bauteil aus elastomerem Material mit einer im Bauteil eingebauten elektronischen Schaltung oder elektronischen Einrichtung bereitzustellen, vorzugsweise einen endlosen Antriebsriemen vorzustellen, der zwar mit einer Elektronik zur Erfassung von Zustandsgrößen des Bauteils/Riemens ausgestattet ist, jedoch nicht die beschriebenen Nachteile bei der Herstellung und im Betrieb aufweist. Daher soll die an diesem Bauteil/Riemen angeordnete Elektronik nicht nach konventioneller Art im Grundmaterial des Bauteils bzw. des Riemens einvulkanisiert sein, und die Elektronik soll bei der betriebsbedingten Bewegung des Riemens keinen Dehnungen und/oder Stauchungen ausgesetzt sein.

Zur Lösung dieser Aufgabe wird ein Verfahren zur Herstellung eines Antriebsriemens mit den Merkmalen des Hauptanspruchs 1 beziehungsweise ein Antriebsriemen mit den Merkmalen des Hauptanspruchs 13 vorgeschlagen. Vorteilhafte Weiterbildungen sind in den abhängigen Ansprüchen definiert. Die Herstellung eines Antriebsriemens mit einer Antriebsseite, einer Rückenseite und Seitenflächen gestaltet sich so, dass die Konfektion auf einer Aufbautrommel und in Form eines zylindrischen Rohlings erfolgt, dessen Länge einem Vielfachen der Antriebsriemenbreite entspricht, besteht darin, dass während der Konfektion und vor der Vulkanisation des zylindrischen Rohlings in Teilbereichen des Rohlings sich mindestens über Teillängen des zylindrischen Rohlings erstreckende Zwischenlagen oder Streifen aus nicht durch Vulkanisation vernetzbarem Material in den Rohlingsaufbau eingefügt werden, wobei nach der Konfektion der Rohling ausvulkanisiert und in einzelne Antriebsriemen geschnitten wird, wobei danach die Zwischenlagen oder Streifen aus den vereinzelten Antriebsriemen entnommen werden und in den so entstandenen flächigen Leer- oder Zwischenraum die elektronische Schaltung oder elektronische Einrichtung eingeführt wird. So lässt sich das erfindungsgemäße Verfahren leicht in den Ablauf der üblichen und bekannten Herstellungsverfahren von Antriebsriemen integrieren.

Dabei werden während der Konfektion und vor der Vulkanisation des Rohlings in Teilbereichen des Rohlings flächige Zwischenlagen oder Streifen, auch etwa in Form von Patches oder Flicken, aus nicht durch Vulkanisation vernetzbarem Material in den Rohlingsaufbau eingefügt. Nach der Konfektion wird der Rohling zum Bauteil ausvulkanisiert und ggf. geschnitten oder getrimmt.

Danach werden die Zwischenlagen oder Streifen aus dem Antriebsriemen durch entsprechend eingebrachte oder verfahrensimmanent entstandene Öffnungen entnommen und in den so entstandenen flächigen Leer- oder Zwischenraum im Bauteil wird eine elektronische Schaltung oder elektronische Einrichtung eingeführt, so dass der Leer- oder Zwischenraum als Aufnahmeraum für die Schaltung genutzt wird. Die elektronische Schaltung oder elektronische Einrichtung ist in ihren räumlichen oder flächigen Ausdehnungen so ausgebildet, dass der Zwischenraum bzw. Aufnahmeraum nur teilweise ausgefüllt ist, jedenfalls in der lateralen Hauptbelastungsrichtung nur teilweise ausgefüllt ist. Damit ist die elektronische Schaltung oder elektronische Einrichtung gekapselt und gegenüber Umwelteinflüssen geschützt und gleichzeitig in Bezug auf die Hauptbelastungsrichtungen im Wesentlichen "schwimmend" angeordnet, wodurch keine Stauchungen oder Zugbelastungen auf die Schaltung oder ihren Träger ausgeübt werden kann.

Ein solcherart hergestellter Antriebsriemen mit einer elektronischen Schaltung oder elektronischen Einrichtung erträgt, im Gegensatz zu den bisherigen Ausführungsformen, dauerhafte Dehnungen und Stauchungen durch die Belastungen in einem Riementrieb und erreicht mindestens dieselbe Lebensdauer eines vergleichbaren Bauteils ohne elektronische Einrichtungen.

Eine vorteilhafte Weiterbildung des erfindungsgemäßen Verfahrens zur Herstellung eines Antriebsriemens, welcher auf mindestens einer Seite mit mindestens einer in oder nahe der Außenoberfläche des Zugriemens eingebetteten Gewebelage versehen ist, besteht darin, dass während der Konfektion und vor der Vulkanisation des Bauteilrohlings in Teilbereichen des Rohlings ein oder mehrere den Gewebelagen benachbart angeordnete, flächige Zwischenlagen oder Streifen aus nicht durch Vulkanisation vernetzbarem Material in den Rohlingsaufbau eingefügt werden.

Eine Anordnung in oder zwischen den Gewebelagen sorgt dafür, dass die die Elektronikschaltungen oder die elektronische Einrichtung umgebende Materialmatrix relativ wenig Bewegungen unterworfen ist, da sie durch das eingelegte Gewebe verstärkt ist. Eine solche Ausbildung des Herstellverfahrens und eine solche Anordnung der Elektronikschaltungen verbessert die Haltbarkeit des Bauteils bzw. Antriebsriemens und ihrer eingebauten Bauteile.

Eine besonders vorteilhafte Ausbildung des erfindungsgemäßen Verfahrens besteht darin, dass die Zwischenlagen als Streifen aus Polytetrafluorethylen (Teflon) oder auch aus Silikonpapier ausgebildet sind. Solche Streifen sind als handelsübliche und preiswerte Produkte überall erhältlich und können in beliebigen Formen zurechtgeschnitten und auf den Herstellungsprozess angepasst werden.

Eine vorteilhafte Ausbildung des erfindungsgemäßen Verfahrens besteht darin, dass die elektronische Schaltung oder elektronische Einrichtung auf einem Elektronikträger angeordnet ist, vorzugsweise als Folienschaltung bzw. als eine auf Folie aufgebrachte gedruckte Schaltung ausgebildet ist. Das erleichtert das Einführen der elektronischen Schaltung in den Zwischenraum bzw. Aufnahmeraum. Außerdem können verschiedenartige Schaltungen mit unterschiedlichen Sensoren und Übertragungseinrichtungen als vorgefertigte und nach Kundenwunsch vorbereitete Elektronikschaltungen in den Aufnahmeraum eingeführt werden.

Eine weitere vorteilhafte Ausbildung des erfindungsgemäßen Verfahrens besteht darin, dass die elektronische Schaltung oder elektronische Einrichtung, vorzugsweise der Elektronikträger, über eine linienartige, fleckförmige oder punktförmige Verbindung in dem flächigen Leer- oder Zwischenraum, d.h. in ihrem Aufnahmeraum fixiert wird, vorzugsweise verklebt wird. Mit einer solchen oft punktförmigen Fixierung wird die im wesentlichen "schwimmende Lagerung" erhalten, ohne dass eine undefinierte Position des Elektronikbauteils entstehen kann, beispielsweise ein Verschieben der elektronischen Einrichtung in eine ungünstige Sende- oder Übertragungsposition.

Eine weitere vorteilhafte Ausbildung des erfindungsgemäßen Verfahrens besteht darin, dass die eingebrachte elektronische Schaltung oder elektronische Einrichtung einen Temperatursensor, vorzugsweise einen SAW-Sensor aufweist und der flächige Leer- oder Zwischenraum nach dem Einbringen der Schaltung mit einer elastischen Wärmeleitpaste gefüllt wird. Eine solche Füllung kann dann die Fixierungsaufgabe übernehmen und gleichzeitig eine exzellente Wärmeübertragung auf die Sensorik innerhalb der elektronischen Schaltung ermöglichen.

Eine vorteilhafte Ausbildung des erfindungsgemäßen Verfahrens zur Herstellung eines Antriebsriemens besteht darin, dass die Zwischenlagen oder Streifen so in den zylindrischen Rohling eingefügt werden, dass sie nach dem Schneiden bzw. Vereinzeln der Antriebsriemen auf bzw. von mindestens einer Seitenfläche des Antriebsriemens zugänglich und entnehmbar sind bzw. herausgezogen werden können. Das geschieht beispielsweise dadurch, dass Teflonstreifen über die gesamte Länge bzw. Breite der Konfektionstrommel in den Aufbau eingebracht werden und nach dem Schneiden der bzw. Vereinzeln der Antriebsriemen aus den Schnittflächen herausragen oder dort sichtbar sind und herausgezogen werden können.

Eine vorteilhafte Ausbildung des erfindungsgemäßen Verfahrens zur Herstellung eines Antriebsriemens besteht darin, dass während der Konfektion und des zylindrischen Rohlings in Teilbereichen des Rohlings sich mindestens über Teile der Länge des zylindrischen Rohlings erstreckende Zwischenlagen oder Streifen aus nicht durch Vulkanisation vernetzbarem Material abschnittsweise in den Rohlingsaufbau so eingefügt werden, dass die Enden der Streifen durch während der Konfektion in die äußeren Gewebelagen eingebrachte Einschnitte aus dem konfektionieren Rohling herausragen. Durch eine solche Verfahrensausbildung können beispielsweise relativ breite Zahnriemen oder auch Keilrippenriemen hergestellt, insbesondere geschnitten werden, wobei der Zugang zum flächigen Leer- oder Zwischenraum bzw. Aufnahmeraum für die elektronische Schaltung oder elektronische Einrichtung dann eventuell auch von der Rückenseite der Antriebsriemen möglich ist.

Eine vorteilhafte Ausbildung des erfindungsgemäßen Verfahrens besteht darin, dass nach dem Einbringen der elektronischen Schaltung oder elektronischen Einrichtung in den Leer- oder Zwischenraum/Aufnahmeraum die in oder nahe den Seitenflächen des Antriebsriemens befindlichen Zugänge oder Öffnungen zum Leer- oder Zwischenraum wieder verschlossen werden, vorzugweise durch An- oder Einschmelzen einer thermoplastischen Masse oder Folie. Damit erreicht man eine sichere Kapselung und verhindert, dass die elektronischen Bauteile oder Schaltungen in unvorhergesehener Weise aus ihren Aufnahmeräumen herausgedrückt werden.

Eine vorteilhafte Ausbildung des erfindungsgemäßen Verfahrens besteht darin, dass zur Herstellung eines mit mehreren Gewebelagen versehenen Antriebsriemens die Zwischenlagen aus nicht durch Vulkanisation vernetzbarem Material zwischen zwei Gewebelagen eingefügt werden. Wie bereits oben dargestellt, sorgt eine Anordnung zwischen den Gewebelagen dafür, dass die die Elektronikschaltungen oder die elektronische Einrichtung umgebende Materialmatrix relativ wenig Bewegungen unterworfen ist und verbessert die Haltbarkeit der eingebauten Elektronik.

Eine vorteilhafte Ausbildung des erfindungsgemäßen Verfahrens besteht darin, dass mindestens eine der Gewebelagen dehnbar ausgebildet ist und streifenweise zwischen die anderen Gewebelagen eingenäht oder eingeschweißt wird, wobei es insbesondere vorteilhaft ist, wenn die Gewebelagen an den Rändern der Antriebsriemen verschweißt oder verklebt sind. Dadurch kann dieselbe Widerstandsfähigkeit in besonders hoch beanspruchten Randbereichen gewährleistet werden, wie sie am übrigen Umfang vorhanden ist, wo kein Aufnahmeraum vorgesehen ist.

Das Herstellverfahren ist besonders geeignet, um die üblichen und vielfach genutzten Antriebsriemen mit einer eingebauten elektronischen Schaltung oder elektronischen Einrichtung zu versehen, ohne deren bekannte Herstellung zu sehr zu verändern oder zu beeinflussen. Zahnriemen, Keilriemen, Vielkeilriemen, Breitkeilriemen oder Keilrippenriemen, natürlich auch Flachriemen und andere Antriebsriemen können auf diese Weise eine erhebliche Erweiterung ihrer Einsatzmöglichkeiten bereitstellen und lassen in den damit versehenen Riementrieben eine sichere Wartung und Kontrolle zu.

Generell wird ein Vorteil der erfindungsgemäßen Herstellung auch darin gesehen, dass wegen der Bestückung des Riemens mit der Elektronik erst nach dessen vollständigen Fertigstellung die Elektronik entsprechend individueller Kundenwünsche an der radialen Außenseite des Riemens angebracht werden kann. Der Herstellungsprozess wird dadurch in gewissem Maße auf den Riemenhersteller und den Anwender verteilt. Dadurch hat der Anwender zum Beispiel die Möglichkeit, die Messstelle oder mehrere Messstellen an seinem Riemen festzulegen und die Bestückung des Riemens mit der Elektronik gegebenenfalls selbst vorzunehmen.

Außerdem weist ein gemäß der Erfindung mit dem Aufnahmeraum und der darin befestigten Elektronik ausgestatteter Antriebsriemen keine Beeinträchtigungen seiner mechanischen Festigkeit oder Dauerbelastbarkeit auf, denn an dessen inneren Struktur wurde keine Änderung vorgenommen. Hierdurch können Kundenfreigaben hinsichtlich bisheriger, elektronikloser Riemen ohne oder mit nur geringen Änderungen übernommen werden.

Die elektronische Schaltung oder elektronische Einrichtung kann wenigstens einen Sensor enthalten, beispielsweise einen Temperatursensor, mit dessen Hilfe der Wärmeeintrag in den Riemen beziehungsweise dessen aktuelle Temperatur während dessen Betriebs ermittelbar ist. Es ist bekannt, dass gerade die Betriebstemperatur eines Riemens eine entscheidende Größe für die Beurteilung der schadlosen Gebrauchsdauer eines Tragriemens, Förderriemes oder Antriebsriemens ist.

Der die elektronischen Bauelemente und den Sensor tragende oder mit diesem verbundene Elektronikträger kann aus einer sehr dünnen und in Umfangsrichtung des Riemens gesehen sehr kurzen Platine oder aus einer flexiblen Folie bestehen, wobei letztere Ausführungsform auch als sogenannte Folienelektronik bekannt ist.

Weiter kann vorgesehen sein, dass an dem Elektronikträger wenigstens ein digitaler Schaltkreis, ein analoger Schaltkreis, ein Sensor, ein Empfänger zum Empfangen von elektromagnetischen Wellen und ein Sender zum Beeinflussen oder Senden von elektromagnetischen Wellen angeordnet ist, die signaltechnisch miteinander verbunden sind.

Die Erfindung wird nachfolgend anhand eines Ausführungsbeispiels weiter erläutert, welches in der beigefügten Zeichnung dargestellt ist. Hierin zeigt
- Fig. 1: einem einfachen Riementrieb mit einem Breitkeilriemen für einen Mähdrescher, der nach dem erfindungsgemäßen Verfahren hergestellt ist,
- Fig. 2: eine perspektivische, schematische Ansicht eines mit einer elektronischen Einrichtung auf einer Trägerfolie versehenen Breitkeilriemens des Breitkeilriementriebs gemäß Fig. 1.

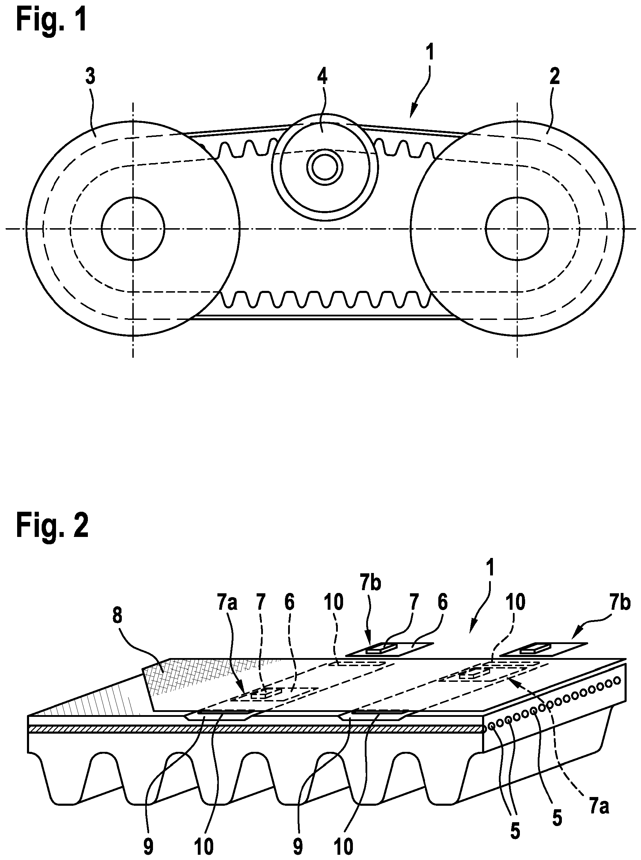

Fig. 1 zeigt prinzipiell einen Riementrieb, bei dem ein erfindungsgemäß hergestellter Breitkeilriemen 1 eine Abtriebsscheibe 2, eine mit einem nicht näher dargestellten Elektromotor angetriebene Antriebsscheibe 3 und eine Spannrolle 4 teilweise umschlingend umläuft.

Fig. 2 zeigt einen Abschnitt des als Breitkeilriemen 1 ausgebildeten Antriebsriemens mit in Längsrichtung angeordneten Zugträgern oder Corden 5. Der Breitkeilriemen 1 weist eine auf einer Trägerfolie 6 angeordnet elektronische Schaltung 7 auf, nämlich einen SAW Sensor (Surface-Acoustic-Wave Sensor) zur Temperaturmessung innerhalb des Breitkeilriemens auf.

Während der Konfektion und vor der Vulkanisation des Bauteilrohlings für den Breitkeilriemen wurden in Teilbereichen des Rohlings flächige Teflonstreifen in den Rohlingsaufbau eingefügt und nach der Konfektion und Vulkanisation wieder entnommen, so dass unterhalb der Gewebelage 8 ein flächiger Leer- oder Zwischenraum als Aufnahmeraum 9 für die auf einer Trägerfolie 6 angeordnet elektronische Schaltung 7 entstand.

Fig 2 zeigt nun die elektronische Schaltung 7 einmal in der Position 7a nach der Einführung in den Aufnahmeraum 9 und einmal in der Position 7b vor der seitlichen Einführung in den Aufnahmeraum 9. Die elektronische Schaltung 6 und die zugehörige Trägerfolie 7 sind in ihren räumlichen oder flächigen Ausdehnungen so ausgebildet ist, dass der Zwischenraum bzw. Aufnahmeraum 9 nur teilweise ausgefüllt ist.

Nach dem Einbringen der elektronischen Schaltung in Form des SAW-Sensors auf Trägerfolie sind die Zugänge oder Öffnungen zum Aufnahmeraum 9 durch Einschmelzen einer thermoplastischen Masse 10 wieder verschlossen worden, wie es an dem in Fig. 2 gezeigten Abschnitt des Breitkeilriemens erkennbar ist.

### Bezugszeichenliste

### (Teil der Beschreibung)

- 1: Antriebsriemen, Breitkeilriemen
- 2: Abtriebsscheibe
- 3: Antriebsscheibe
- 4: Spannrolle
- 5: Zugträger / Cord
- 6: Trägerfolie
- 7: elektronische Schaltung, elektronische Einrichtung
- 7a: elektronische Schaltung, Position nach der Einführung in den Aufnahmeraum
- 7b: elektronische Schaltung, Position vor der Einführung in den Aufnahmeraum
- 8: Gewebelage
- 9: Aufnahmeraum / flächiger Leer- oder Zwischenraum
- 10: eingeschmolzene thermoplastischen Masse

## Patentansprüche

1. Verfahren zur Herstellung eines unter Zugspannung umlaufend angetriebenen und mit einer Antriebsseite, einer Rückenseite und mit Seitenflächen versehenen Antriebsriemens (1) aus elastomerem Material, mit einer eingebauten elektronischen Schaltung oder elektronischen Einrichtung (7), wobei der Antriebsriemen in Längsrichtung angeordnete Zugträger oder Corde aufweist,
- wobei die Konfektion auf einer Aufbautrommel und in Form eines zylindrischen Rohlings erfolgt, dessen Länge einem Vielfachen der Antriebsriemenbreite entspricht, wobei während der Konfektion und vor der Vulkanisation des zylindrischen Rohlings in Teilbereichen des Rohlings sich mindestens über Teillängen des zylindrischen Rohlings erstreckende Zwischenlagen oder Streifen aus nicht durch Vulkanisation vernetzbarem Material in den Rohlingsaufbau eingefügt werden ,
- wobei nach der Konfektion der Rohling ausvulkanisiert und in einzelne Antriebsriemen geschnitten wird, wobei danach die Zwischenlagen oder Streifen aus den vereinzelten Antriebsriemen entnommen werden und in den so entstandenen flächigen Leer- oder Zwischenraum (9) eine elektronische Schaltung oder elektronische Einrichtung (7) eingeführt wird, die in ihren räumlichen oder flächigen Ausdehnungen so ausgebildet ist, dass der Zwischenraum nur teilweise ausgefüllt ist.

2. Verfahren zur Herstellung eines Antriebsriemens nach Anspruch 1, welcher auf mindestens einer Seite mit mindestens einer in oder nahe der Außenoberfläche des Zugriemens eingebetteten Gewebelage (8) versehen ist, **dadurch gekennzeichnet, dass** während der Konfektion und vor der Vulkanisation des Bauteilrohlings in Teilbereichen des Rohlings ein oder mehrere den Gewebelagen (8) benachbart angeordnete, flächige Zwischenlagen oder Streifen aus nicht durch Vulkanisation vernetzbarem Material in den Rohlingsaufbau eingefügt werden.

3. Verfahren nach Anspruch 1 oder 2, bei dem die Zwischenlagen als Streifen aus Polytetrafluorethylen (Teflon) oder Silikonpapier ausgebildet sind.

4. Verfahren nach einem der Ansprüche 1 bis 3, bei dem die elektronische Schaltung oder elektronische Einrichtung (7) auf einem Elektronikträger (6) angeordnet ist, vorzugsweise als Folienschaltung bzw. als eine auf Folie aufgebrachte gedruckte Schaltung ausgebildet ist.

5. Verfahren nach einem der Ansprüche 1 bis 4, bei dem die elektronische Schaltung oder elektronische Einrichtung (7), vorzugsweise der Elektronikträger (6), über eine linienartige, fleckförmige oder punktförmige Verbindung in dem flächigen Leer- oder Zwischenraum fixiert wird, vorzugsweise verklebt wird.

6. Verfahren nach einem der Ansprüche 1 bis 5, bei dem die eingebrachte elektronische Schaltung oder elektronische Einrichtung (7) einen Temperatursensor, vorzugsweise einen SAW-Sensor aufweist und der flächige Leer- oder Zwischenraum nach dem Einbringen der Schaltung mit einer elastischen Wärmeleitpaste gefüllt wird.

7. Verfahren nach Anspruch 6, bei dem die Zwischenlagen oder Streifen so in den zylindrischen Rohling eingefügt werden, dass sie nach dem Schneiden der Antriebsriemen auf bzw. von mindestens einer Seitenfläche des Antriebsriemens zugänglich und entnehmbar sind

8. Verfahren nach Anspruch 6 oder 7, bei dem während der Konfektion des zylindrischen Rohlings in Teilbereichen des Rohlings sich mindestens über Teile der Länge des zylindrischen Rohlings erstreckende Zwischenlagen oder Streifen aus nicht durch Vulkanisation vernetzbarem Material abschnittsweise in den Rohlingsaufbau so eingefügt werden, dass die Enden der Streifen durch während der Konfektion in die äußeren Gewebelagen eingebrachte Einschnitte aus dem konfektionierten Rohling herausragen.

9. Verfahren nach einem der Ansprüche 6 bis 8, bei dem nach dem Einbringen der elektronischen Schaltung oder elektronische Einrichtung in den Leer- oder Zwischenraum die Zugänge oder Öffnungen zum Leer- oder Zwischenraum (9) wieder verschlossen werden, vorzugweise durch An- oder Einschmelzen einer thermoplastischen Masse (10) oder Folie.

10. Verfahren nach einem der Ansprüche 6 bis 9 zur Herstellung eines mit mehreren Gewebelagen versehenen Antriebsriemens, bei dem die Zwischenlagen aus nicht durch Vulkanisation vernetzbarem Material zwischen zwei Gewebelagen (8) eingefügt werden.

11. Verfahren nach Anspruch 10, bei dem mindestens eine der Gewebelagen (8) dehnbar ausgebildet ist und streifenweise zwischen die anderen Gewebelagen eingenäht oder eingeschweißt wird.

12. Verfahren nach Anspruch 10 oder 11, bei dem die Gewebelagen an den Rändern der Antriebsriemen verschweißt oder verklebt sind.

13. Antriebsriemen mit einer eingebauten elektronischen Schaltung oder elektronischen Einrichtung, hergestellt nach einem der Ansprüche 2 bis 12 und ausgebildet als Zahnriemen, Keilriemen, Vielkeilriemen, Breitkeilriemen oder Keilrippenriemen

## Claims

1. Method for producing a drive belt (1) of elastomer material, which is driven to run around under tensile stress and is provided with a drive side, a rear side and with lateral surfaces, with a built-in electronic circuit or electronic device (7), the drive belt having tension members or cords arranged in the longitudinal direction,
- wherein fabrication takes place on a building drum and in the form of a cylindrical blank, the length of which corresponds to a multiple of the width of the drive belt, wherein, during the fabrication and before the vulcanization of the cylindrical blank, intermediate plies or strips which extend at least over part-lengths of the cylindrical blank and are of material which cannot be crosslinked by vulcanization are inserted into the blank structure in subregions of the blank,
- wherein, after the fabrication, the blank is completely vulcanized and cut into individual drive belts, wherein after that the intermediate plies or strips are removed from the individually separated drive belts, and there is inserted into the shallow empty space or intermediate space (9) thereby created an electronic circuit or electronic device (7) which is formed in its three-dimensional or two-dimensional extents in such a way that the intermediate space is only partially filled.

2. Method for producing a drive belt according to Claim 1, which is provided on at least one side with at least one fabric ply (8) embedded in or close to the outer surface of the traction belt, **characterized in that**, during the fabrication and before the vulcanization of the component blank, one or more planar intermediate plies or strips which are arranged adjacently to the fabric plies (8) and are of material which cannot be crosslinked by vulcanization are inserted into the blank structure in subregions of the blank.

3. Method according to Claim 1 or 2, in which the intermediate plies are formed as strips of polytetrafluoroethylene (Teflon) or silicone paper.

4. Method according to one of Claims 1 to 3, in which the electronic circuit or electronic device (7) is arranged on an electronics carrier (6), preferably being formed as a film circuit or as a printed circuit applied to film.

5. Method according to one of Claims 1 to 4, in which the electronic circuit or electronic device (7), preferably the electronics carrier (6), is fixed, preferably adhesively bonded, in the shallow empty space or intermediate space by way of a linear, spot-like or point-like connection.

6. Method according to one of Claims 1 to 5, in which the introduced electronic circuit or electronic device (7) has a temperature sensor, preferably a SAW sensor, and the shallow empty space or intermediate space is filled with an elastic heat-conducting paste after the introduction of the circuit.

7. Method according to Claim 6, in which the intermediate plies or strips are inserted into the cylindrical blank in such a way that, after the cutting of the drive belts, they are accessible and removable on or from at least one lateral surface of the drive belt.

8. Method according to Claim 6 or 7, in which, during the fabrication of the cylindrical blank, intermediate plies or strips which extend at least over parts of the length of the cylindrical blank and are of material which cannot be crosslinked by vulcanization are inserted in certain portions into the blank structure in subregions of the blank in such a way that the ends of the strips project out of the fabricated blank through incisions incorporated into the outer fabric plies during the fabrication.

9. Method according to one of Claims 6 to 8, in which, after introducing the electronic circuit or electronic device into the empty space or intermediate space, the accesses or openings to the empty space or intermediate space (9) are closed again, preferably by melting on or melting in a thermoplastic compound (10) or film.

10. Method according to one of Claims 6 to 9 for producing a drive belt provided with a plurality of fabric plies, in which the intermediate plies of material which cannot be crosslinked by vulcanization are inserted between two fabric plies (8).

11. Method according to Claim 10, in which at least one of the fabric plies (8) is designed to be extensible and is sewn in or welded in in strip form between the other fabric plies.

12. Method according to Claim 10 or 11, in which the fabric plies are welded or adhesively bonded to the edges of the drive belts.

13. Drive belt with a built-in electronic circuit or electronic device, produced according to one of Claims 2 to 12 and designed as a toothed belt, V-belt, multi V-belt, wide V-belt or V-ribbed belt.

## Revendications

1. Procédé de fabrication d'une courroie d'entraînement (1), en matériau élastomère, qui est entraînée en rotation sous tension, qui est pourvue d'un côté entraînement, d'un côté arrière et de surfaces latérales et dans laquelle est incorporé un circuit électronique ou un dispositif électronique (7), la courroie d'entraînement comportant des éléments de tension ou des cordes disposés dans la direction longitudinale,
- la réalisation étant effectuée sur un tambour de structure et sous la forme d'une ébauche cylindrique dont la longueur correspond à un multiple de la largeur de la courroie d'entraînement, des bandes ou couches intermédiaires de matériau non réticulable par vulcanisation, lesquelles s'étendent dans des zones de l'ébauche au moins sur des parties de longueur de l'ébauche cylindrique, étant insérées dans la structure de l'ébauche lors de la réalisation et avant la vulcanisation de l'ébauche cylindrique,
- l'ébauche étant vulcanisée après la réalisation et découpée en courroies d'entraînement individuelles, les bandes ou couches intermédiaires étant ensuite retirées des courroies d'entraînement individualisées et un circuit électronique ou un dispositif électronique (7) étant inséré dans l'espace vide ou intermédiaire (9) sensiblement bidimensionnel ainsi créé et étant conçu en termes de dimensions spatiales ou surfaciques de sorte que l'espace intermédiaire ne soit que partiellement rempli.

2. Procédé de fabrication d'une courroie de transmission selon la revendication 1 qui est pourvue sur au moins un côté d'au moins une couche de tissu (8) noyée dans la surface extérieure de la courroie de tension ou à proximité de ladite surface extérieure, **caractérisé en ce qu'**une ou plusieurs bandes ou couches intermédiaires sensiblement bidimensionnelles de matériau non réticulable par vulcanisation, lesquelles sont disposées de manière adjacentes aux couches de tissu (8), sont insérées dans la structure de l'ébauche dans des zones de l'ébauche pendant la réalisation et avant la vulcanisation de l'ébauche de composant.

3. Procédé selon la revendication 1 ou 2, dans lequel les couches intermédiaires sont conçues sous forme de bandes de polytétrafluoréthylène (téflon) ou de papier siliconé.

4. Procédé selon l'une des revendications 1 à 3, dans lequel le circuit électronique ou le dispositif électronique (7) est disposé sur un support d'électronique (6), de préférence sous la forme d'un circuit en film ou d'un circuit imprimé appliqué sur un film.

5. Procédé selon l'une des revendications 1 à 4, dans lequel le circuit électronique ou le dispositif électronique (7), de préférence le support d'électronique (6), est fixé, de préférence collé, dans l'espace vide ou intermédiaire sensiblement bidimensionnel par le biais d'une liaison en forme de ligne, de tache ou de point.

6. Procédé selon l'une des revendications 1 à 5, dans lequel le circuit électronique ou le dispositif électronique (7) incorporé comporte un capteur de température, de préférence un capteur SAW, et l'espace vide ou intermédiaire sensiblement bidimensionnel est rempli d'une pâte de conduction thermique élastique après que le circuit a été introduit.

7. Procédé selon la revendication 6, dans lequel les bandes ou couches intermédiaires sont insérées dans l'ébauche cylindrique de façon à être accessibles sur au moins une surface latérale de la courroie d'entraînement, et retirables de ladite surface latérale, après découpe des courroies d'entraînement.

8. Procédé selon la revendication 6 ou 7, dans lequel des bandes ou couches intermédiaires en matériau non réticulable par vulcanisation, lesquelles s'étendent dans des zones de l'ébauche au moins sur des parties de la longueur de l'ébauche cylindrique, sont insérées par portions dans la structure de l'ébauche pendant la réalisation de l'ébauche cylindrique de sorte que les extrémités des bandes fassent saillie de l'ébauche réalisée à travers des incisions ménagées dans les couches de tissu extérieures pendant la réalisation.

9. Procédé selon l'une des revendications 6 à 8, dans lequel, après avoir introduit le circuit électronique ou le dispositif électronique dans l'espace vide ou intermédiaire, les accès ou les ouvertures menant à l'espace vide ou intermédiaire (9) sont refermées, de préférence par introduction d'une matière thermoplastique (10) ou application d'un film et fusion.

10. Procédé selon l'une des revendications 6 à 9 de fabrication d'une courroie de transmission pourvue d'une pluralité de couches de tissu, procédé dans lequel les couches intermédiaires de matériau non réticulable par vulcanisation sont insérées entre deux couches de tissu (8).

11. Procédé selon la revendication 10, dans lequel au moins une des couches de tissu (8) est extensible et est cousue ou soudée sous forme de bandes entre les autres couches de tissu.

12. Procédé selon la revendication 10 ou 11, dans lequel les couches de tissu sont soudées ou collées au niveau des bords de la courroie d'entraînement.

13. Courroie de transmission dans laquelle est incorporé un circuit électronique ou un dispositif électronique, ladite courroie de transmission étant fabriquée selon l'une des revendications 2 à 12 et conçue sous de courroie crantée, de courroie trapézoïdale, de courroie trapézoïdale multiple, de courroie trapézoïdale large ou de courroie à nervures.
